# EUROPEAN PATENT SPECIFICATION

(11) **EP 3 882 515 B1**
(45) Date of publication and mention of the grant of the patent: **24.07.2024**
(21) Application number: 18939925.6
(22) Date of filing: 15.11.2018
(51) Int. Cl.: F21S 43/20, F21S 43/31, F21S 43/40, F21S 43/50, G02B 5/04, G02B 5/08, G02B 5/32, G03H 1/22, G03H 1/02

(54) **VEHICLE LAMP**
FAHRZEUGLAMPE
LAMPE DE VÉHICULE

(43) Date of publication of application: 22.09.2021
(73) Proprietor: ZKW Group GmbH, 3250 Wieselburg (AT)
(72) Inventor: JO, Juung, Seoul 06772 (KR)
(74) Representative: Patentanwaltskanzlei Matschnig & Forsthuber OG
(86) International application number: PCT/KR2018/013973
(87) International publication number: WO 2020/101070

(56) References cited:
- JP-A- 2000 225 889
- JP-A- 2006 331 658
- JP-A- 2006 331 658
- KR-A- 20130 021 868
- KR-A- 20150 134 979
- KR-A- 20150 134 979
- KR-A- 20160 018 917
- KR-B1- 101 684 003
- US-A1- 2010 215 903
- US-A1- 2018 216 799

## Description

### TECHNICAL FIELD

The present disclosure relates to a vehicle lamp for forming a three-dimensional lighting pattern.

### BACKGROUND ART

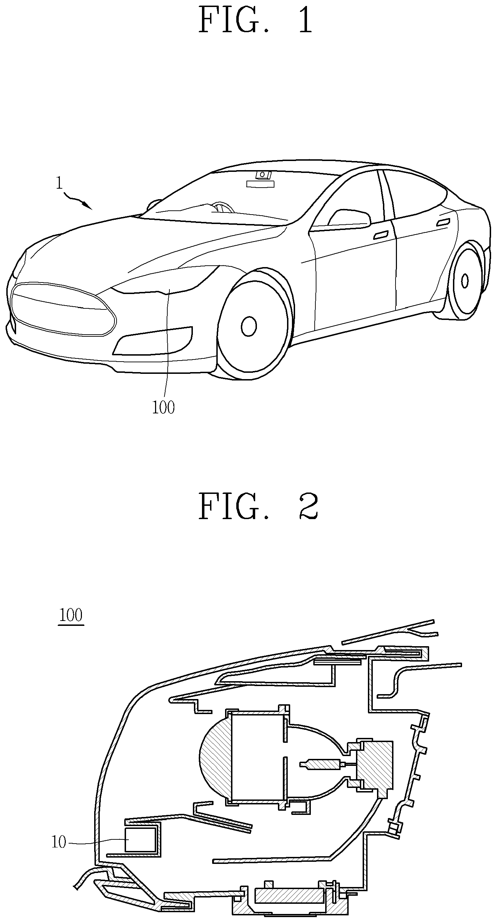

Referring to FIGS. 1 and 2, in general, a vehicle 1 is provided with a lamp device 100 for stably securing a driver's view or informing other vehicles of a driving state of the vehicle 1 when an ambient light is low while driving.

A vehicle lamp device includes a headlamp 10 installed at the front of a vehicle and a rear lamp installed at the rear of the vehicle. The headlamp is a lamp that lights the front and illuminates the front during driving at night. The rear lamp includes a stop lamp that lights up when a driver operates a brake and a turn signal lamp that indicates a driving direction of the vehicle. In general, halogen lamps or gas discharge lamps are usually used, but in recent years, light-emitting diodes (LEDs) are in the spotlight as light sources for vehicle lamps.

The LED can enhance a degree of freedom for design of a lamp by minimizing a size thereof and exhibit economical efficiency by virtue of a semi-permanent lifespan, but most of the LEDs are currently produced in a form of a package. The LED itself other than the package is under development as a semiconductor light-emitting device of converting a current into light, namely, an image displaying light source equipped in an electronic device such as an information communication device.

In recent years, attempts have been made to vary an illumination (lighting) pattern of a lamp as the size of the semiconductor light-emitting device decreases. However, in order to realize various illumination patterns, structures other than a light source are required, which causes an increase in the size of the lamp, a decrease in brightness, and the like. As a result, various implementations of the illumination pattern of the lamp are limited. Document KR 2015 0134979 A discloses a holographic image-displaying lamp for a vehicle. Document JP 2006 331658 A discloses an optical member for an LED backlight. Document KR 2013 0021868 A discloses a stereoscopic image display device. Document US 2018/216799 A1 discloses an LED lighting device that is compact and capable of uniformly irradiating different regions. Document US 2010/215903 A1 discloses various thin-film coatings, electro-optic elements and assemblies incorporating these elements.

### DISCLOSURE

### TECHNICAL PROBLEM

The present disclosure is directed to providing a lamp capable of implementing a three-dimensional lighting pattern.

In addition, the present disclosure is directed to providing a vehicle lamp having a three-dimensional lighting pattern and luminance of a predetermined level or more.

Furthermore, the present disclosure is directed to providing a structure such that the three-dimensional lighting pattern implemented in the vehicle lamp is capable of being seen constantly regardless of a direction of looking toward the lamp.

### TECHNICAL SOLUTION

In order to achieve the above-described aspect, the claimed invention provides a lamp including a light source emitting light, a hologram film in which an interference fringe of the light is formed, a reflection plate disposed in a tilted state at a predetermined angle with the hologram film such that the light emitted from the light source is reflected and the reflected light is incident on the hologram film obliquely, and a prism sheet disposed on one surface of the hologram film and including a plurality of concave-convex structures such that the light passing through the hologram film is refracted in one direction, wherein the reflection plate is composed of a plurality of regions and at least one of the plurality of regions has a different reflectance from the remaining regions such that an amount of the light incident on the hologram film is uniform.

In one embodiment, the prism sheet may be disposed on a surface facing one surface at which light reflected from the reflection plate is incident on both surfaces of the hologram film.

In one embodiment, each of the plurality of concave-convex structures may have an inclined surface that forms a predetermined angle with the hologram film.

In one embodiment, the angle between the inclined surface and the hologram film may be different depending on a position of each of the plurality of concave-convex structures.

In one embodiment, the hologram film may include a substrate made of an optically clear material, an optically clear adhesive (OCA) layer laminated on the substrate, a photopolymer layer laminated on the OCA layer, and a protective layer laminated on the photopolymer layer.

In one embodiment, an interference fringe may be formed on the photopolymer layer such that the hologram pattern is formed by the light transmitted through the hologram film.

In one embodiment, a reflectance of the reflection plate may decrease toward a lower side of the reflection plate.

In one embodiment, a light-shielding plate disposed in a direction opposite to a reflection surface of the reflection plate and disposed to be overlapped with the hologram film may be further included.

In one embodiment, an auxiliary light source for emitting light may be disposed at least a part of the light-shielding plate.

In one embodiment, a housing overlapped with at least one of the light source and the reflection plate and disposed to surround the lamp may be further included.

### ADVANTAGEOUS EFFECT

According to the present disclosure, since light passing through a hologram film is concentrated in a specific direction, it is possible to implement a three-dimensional lighting pattern and simultaneously, to implement luminance of a predetermined level or more.

In addition, according to the present disclosure, an amount of light reaching eyes of an observer becomes constant regardless of a direction to look toward a lamp. Accordingly, the present disclosure allows the three-dimensional lighting pattern implemented in the lamp to look constant regardless of a direction of looking toward the lamp.

### BRIEF DESCRIPTION OF THE DRAWINGS

FIG. 1 is a conceptual diagram illustrating a vehicle.
FIG. 2 is a cross-sectional view of a lamp device included in a vehicle.
FIGS. 3 and 4 are a conceptual diagram illustrating a vehicle lamp according to the present disclosure.
FIG. 5 is a cross-sectional view of a hologram film.
FIG. 6 is a cross-sectional view of a prism sheet.
FIG. 7 is a conceptual diagram illustrating a vehicle lamp including a plurality of modules.
FIG. 8 is a conceptual diagram illustrating a vehicle lamp including a light-shielding plate.
FIG. 9 is a conceptual diagram illustrating a shape of a lighting pattern according to a presence of a light-shielding plate.
FIGS. 10 and 11 are conceptual diagrams illustrating a vehicle lamp not including a housing.
FIGS. 12 and 13 are conceptual diagrams illustrating a vehicle lamp including a housing.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

A singular representation may include a plural representation unless it represents a definitely different meaning from the context.

Terms such as "include" or "has" are used herein and it should be understood that they are intended to indicate an existence of several components, functions or steps, disclosed in the specification, and it is also understood that greater or fewer components, functions, or steps may likewise be utilized.

A lamp according to the present disclosure has a structure for providing a three-dimensional lighting pattern.

In order to implement a hologram image, a light ray should be irradiated onto a film in which an interference fringe is stored. When light is irradiated onto the film in which the interference fringe is stored, only waves having the same frequency as when the interference fringe was recorded are reproduced as a stereoscopic image, and other waves pass through the film in which the interference fringe is stored.

When the hologram image is implemented as a vehicle lamp, light passing through the film in which the interference fringe is stored is light that is substantially lost. A vehicle lamp should have brightness of a predetermined level or more, and since an amount of light lost is a lot when the hologram image is implemented, it is difficult for the hologram image to have brightness of a predetermined level or more.

In addition, in the holographic image, distortion of the image may occur depending on a direction viewed by an observer. The vehicle lamp is viewed by an observer from various angles, which causes many limitations in implementing the hologram image in the vehicle lamp.

Hereinafter, a structure for solving the above-described problem will be described. A lamp according to an embodiment of the present disclosure includes a light source, a hologram film, a reflection plate and a prism sheet. However, the present disclosure is not limited thereto, and the lamp according to the present disclosure may include more components than those described above.

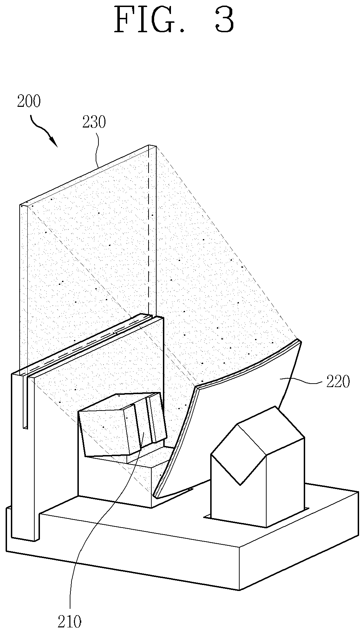

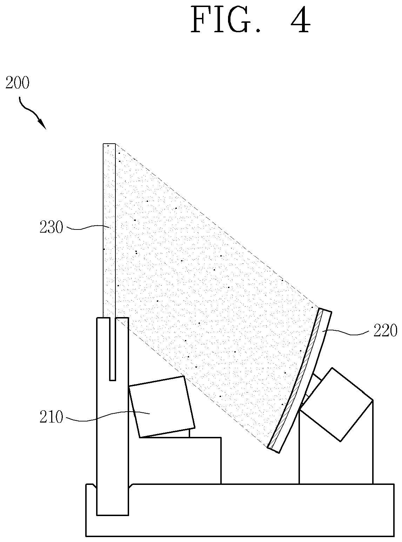

FIGS. 3 and 4 are conceptual diagrams illustrating a vehicle lamp according to the present disclosure.

A light source 210 emits light. The light source 210 may be formed in various types such as a laser diode, a semiconductor light-emitting device, and an organic light-emitting diode. However, the type of light source is not limited thereto separately.

The light source 210 is not disposed to face the hologram film 230 but is disposed to face the reflection plate 220. The light emitted from the light source 210 is not emitted directly toward the hologram film 230, but toward the reflection plate 220.

The reflection plate 220 is disposed in a tilted state at a predetermined angle with the hologram film 230 such that light emitted from the light source 210 is reflected and the reflected light is incident on the hologram film 230 obliquely.

Here, the reflection plate 220 may be composed of a plurality of regions, and at least one of the plurality of regions may have a different reflectance from the remaining region. This is for making an amount of light incident on the hologram film 230 for each region of the hologram film 230 different.

In detail, a distance between each of the plurality of regions included in the hologram film 230 and the light source 210 may be different from each other. In this case, an amount of light incident on the region close to the light source 210 is greater than that on the region far from the light source 210. Therefore, a phenomenon occurs in which brightness of the image is changed depending on a direction in which the holographic image is viewed.

The present disclosure implements reflectance of the reflection plate 220 differently for each region such that an amount of light incident on each of the plurality of regions included in the hologram film 230 is uniform. In detail, reflectance of a lower region of the reflection plate 220 that is close to the light source 210 may be smaller than that of an upper region of the reflection plate 220 that is far from the light source 210.

In one embodiment, reflectance of the reflection plate 220 may increase in an upward direction of the reflection plate 220. The present disclosure concentrates light in a region far from the light source 210 among a plurality of regions included in the hologram film, thereby making an amount of light incident on the hologram film uniform.

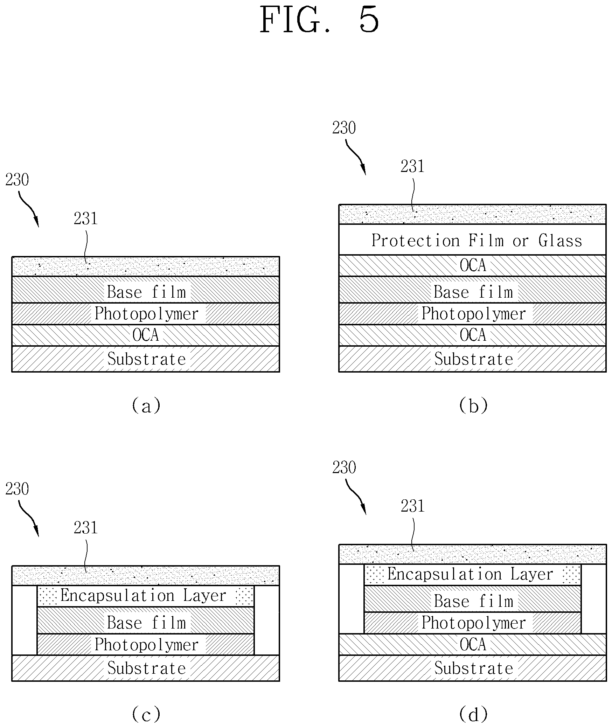

Meanwhile, light reflected by the reflection plate 220 is reflected toward the hologram film 230. Referring to FIG. 5, the hologram film 230 may have various structures. In detail, referring to (a) of FIG. 5, the hologram film 230 may include a substrate, an optically clear adhesive (OCA) layer, a photopolymer layer, and a base film.

The substrate should be made of an optically clear material. The substrate serves to support components constituting the hologram film 230. The substrate is disposed at one surface facing the reflection plate 220 of both surfaces of the hologram film 230. Accordingly, the light reflected by the reflection plate 220 is first incident on the substrate.

The OCA layer may be formed on the substrate. The OCA layer is used to bond the substrate and the photopolymer layer. When there are other means for bonding the photopolymer layer and the substrate, the OCA layer is not essential.

Meanwhile, a photopolymer layer is laminated on the OCA layer. An interference fringe is formed at the photopolymer layer, and a hologram image is formed due to the interference fringe.

The hologram image is implemented by using only light having a frequency coinciding with the light irradiated when the interference fringe was formed among the light incident on the hologram film 230. The light having a frequency not coinciding with the light irradiated when the interference fringe was formed passes through the hologram film 230 as it is.

A traveling path of the light having a frequency coinciding with the light irradiated when the interference fringe was formed is changed while passing through the photopolymer layer, however the traveling path of the light having a frequency not coinciding with the light irradiated when the interference fringe was formed is not changed and passes through the hologram film 230 as it is. Accordingly, light emitted from the same light source is dispersed in two different directions.

The light reaching an observer is light whose traveling path is changed while passing through the hologram film 230, and the light that does not change its traveling path while passing through the hologram film 230 does not reach the observer. The present disclosure provides a structure that allows the light whose traveling path is not changed to reach the observer while the light passes through the hologram film 230. This will be described later and the remaining structure of FIG. 5 will be described.

Referring to (a) of FIG. 5, a protective layer may be formed on the photopolymer layer. The protective layer serves to protect the photopolymer layer from physical impact. The protective layer may be implemented as various forms.

In detail, referring to (b) of FIG. 5, the protective layer may include a first protective layer (Base film) for protecting a physical impact, and a second protective layer (Protection Film or Glass) for protecting the photopolymer layer from moisture, etc. introduced from the outside. The OCA layer may be formed between the first and second protective layers.

On the other hand, referring to (c) of FIG. 5, the hologram film may include an encapsulation layer. The encapsulation layer is sealed by covering both an upper side and side surfaces of the photopolymer layer. In this case, the separate OCA layer may not be disposed between the photopolymer layer and the substrate. However, as shown in (d) of FIG. 5, the OCA layer may be disposed between the substrate and the photopolymer layer even when the encapsulation layer is used.

Meanwhile, a prism sheet is laminated on the protective layer. The prism sheet allows the light whose traveling path is not changed to reach the observer while passing through the hologram film 230.

For this, the prism sheet 231 includes a plurality of concave-convex structures such that the light passing through the hologram film 230 is refracted in one direction.

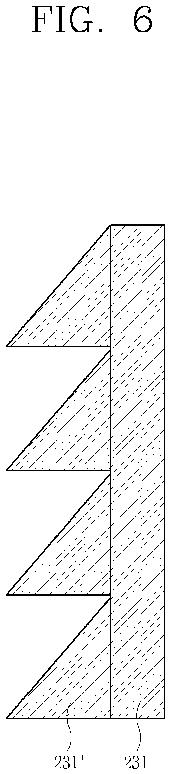

FIG. 6 is a conceptual diagram illustrating a cross-section of a prism sheet.

Referring to FIG. 6, a plurality of concave-convex structures 231' are formed at the prism sheet 231. Each of the concave-convex structures 231' has an inclined surface that forms a predetermined angle with the hologram film 230. As the light passing through the hologram film 230 is refracted by the inclined surface, the traveling path of the light is changed.

The light whose traveling path is not changed while passing through the hologram film 230 is refracted by the inclined surface, and proceeds in the same direction as the direction in which the hologram image is formed. Accordingly, brightness of the hologram image may increase.

Meanwhile, an angle between the inclined surface and the hologram film 230 may be different depending on a position of each of the plurality of concave-convex structures. The traveling path of the light that does not change its traveling path while passing through the hologram film 230 may be different depending on a position at which the light passes. The present disclosure allows the angle formed by the inclined surface and the hologram film 230 to be different depending on a position of the concave-convex structures in order to concentrate the light traveling in various directions to a designated position.

In one embodiment, the angle between the inclined surface and the hologram film 230 may decrease toward a lower side of the hologram film 230

As described above, the present disclosure increases brightness of the hologram image by concentrating the light lost in the direction in which the hologram image is formed while passing through the hologram film 230. Accordingly, the present disclosure allows the hologram image to have sufficient brightness to be used in a vehicle lamp.

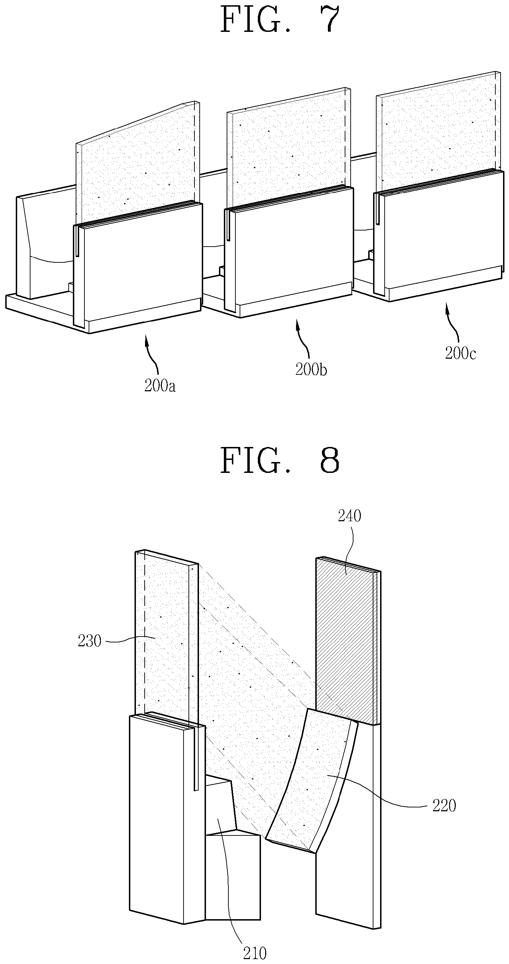

As shown in FIG. 7, the above-described vehicle lamp may have a shape in which a plurality of modules 200a to 200c are disposed at a predetermined interval. The modules may be disposed in various forms, and thus various types of lighting patterns can be implemented.

Meanwhile, the vehicle lamp according to the present disclosure may further include a light-shielding plate 240 disposed in a direction opposite to the reflection surface of the reflection plate 220 to be overlapped with the hologram film 230.

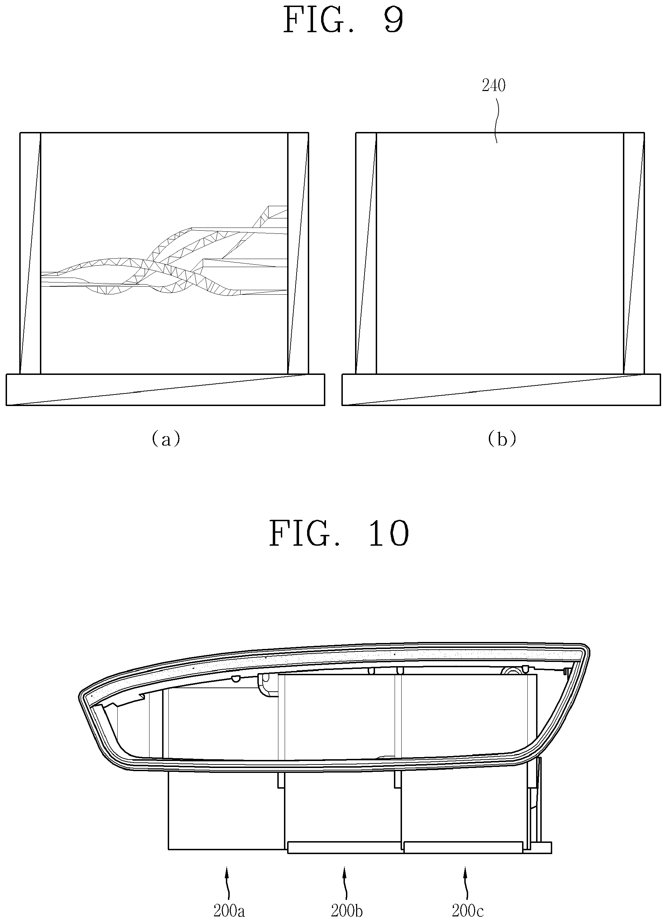

FIG. 8 is a conceptual diagram illustrating a vehicle lamp including a light-shielding plate, and FIG. 9 is a conceptual diagram illustrating a shape of a lighting pattern according to a presence of a light-shielding plate.

Referring to FIG. 8, a light-shielding plate 240 overlapped with the hologram film 230 may be disposed in a rear direction of the reflection plate 220. The presence of the light-shielding plate 240 may not significantly affect the holographic image, but when the hologram image is not implemented, that is, when no light is emitted from the light source 210, the light-shielding plate 240 determines a shape of the lamp.

In detail, referring to (a) of FIG. 9, when the light-shielding plate 240 is not present, the structure disposed inside the lamp is exposed to an outside when the light is not emitted from the light source 210. This may adversely affect aesthetics of the lamp. When the light-shielding plate 240 is installed at the rear side of the reflection plate 220 as shown in (b) of FIG. 9, even when light is not emitted from the light source 210, the structure inside the lamp is not exposed to the outside.

Meanwhile, an auxiliary light source for emitting light may be disposed at the light-shielding plate 240. The auxiliary light source may be used to increase an amount of light in the hologram image when the hologram image is implemented. In this case, the auxiliary light source may be turned on only when the light source is turned on.

The present disclosure improves the aesthetics of the lamp and improves the brightness of the hologram image via the above-described light-shielding plate 240.

Meanwhile, the present disclosure may further include a housing such that a part of the vehicle lamp is not exposed to the outside.

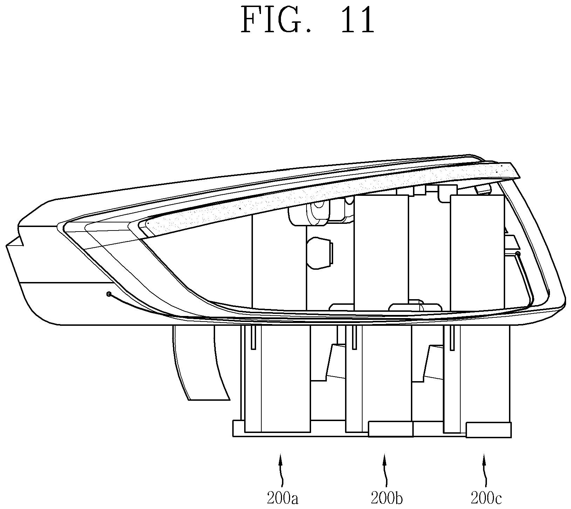

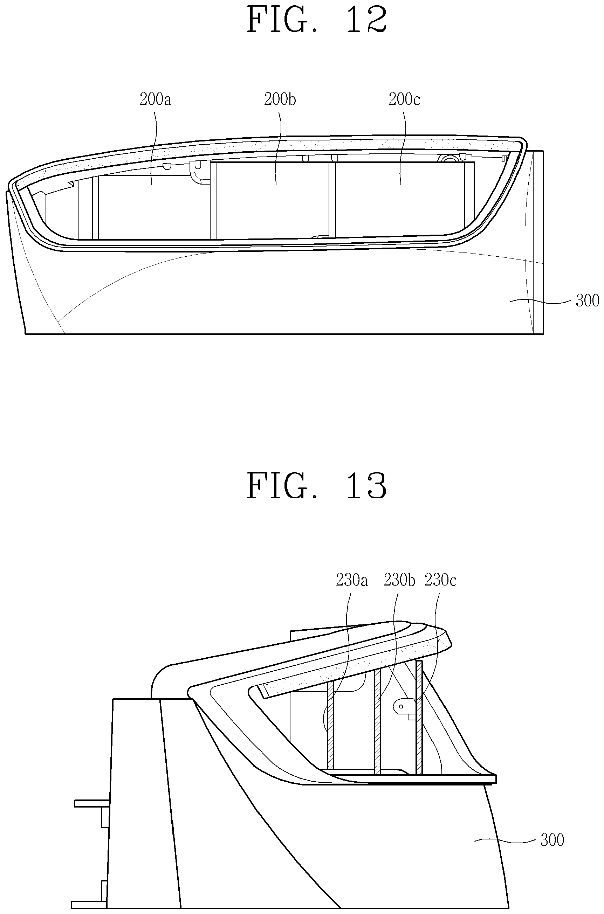

FIGS. 10 and 11 are conceptual diagrams illustrating a vehicle lamp not including a housing, and FIGS. 12 and 13 are conceptual diagrams illustrating a vehicle lamp including a housing.

In detail, the light source 210 irradiating light to the hologram film 230 and the reflection plate 220 should not be overlapped with the hologram film 230. When the hologram film 230 is overlapped with the light source 210 or the reflection plate 220, since the shape of the light source 210 or the reflection plate 220 is exposed to the outside of the hologram image, it is difficult to form a complete hologram image.

For this reason, the light source 210 should be disposed at a position that does not overlap with the hologram film 230, which increases a size of the lamp and hinders aesthetics.

Referring to FIGS. 10 and 11, a light source, a reflection plate and a support means for supporting the hologram film are exposed to the outside to hinder aesthetics of the lamp.

To prevent this, as shown in FIGS. 12 and 13, the present disclosure may further include a housing 300 overlapped with at least one of the light source 210 and the reflection plate 220 and disposed to surround the lamp. The housing 300 prevents the light source 210, the reflection plate 220, and the support means for supporting the hologram film 230 from being exposed to the outside. Accordingly, the present disclosure improves aesthetics of the vehicle lamp.

According to the present disclosure, since light passing through a hologram film is concentrated in a specific direction, it is possible to implement a three-dimensional lighting pattern and simultaneously, to implement luminance of a predetermined level or more.

In addition, according to the present disclosure, an amount of light reaching eyes of an observer becomes constant regardless of a direction to look toward a lamp. Accordingly, the present disclosure allows the three-dimensional lighting pattern implemented in the lamp to look constant regardless of a direction of looking toward the lamp.

It will be apparent to those skilled in the art that the present disclosure may be embodied in other specific forms without departing from the scope thereof.

Therefore, it should also be understood that the above-described embodiments are not limited by any of the details of the foregoing description, unless otherwise specified, but rather should be construed broadly within the scope of the claimed invention as defined in the appended claims.

## Claims

1. A lamp comprising:
a light source (210) emitting light;
a hologram film (230) in which an interference fringe of the light is formed
a reflection plate (220) disposed in a tilted state at a predetermined angle with the hologram film (230) such that the light emitted from the light source (210) is reflected and the reflected light is incident on the hologram film (230) obliquely; and
a prism sheet (231) disposed on one surface of the hologram film (230) and including a plurality of concave-convex structures such that the light passing through the hologram film (230) is refracted in one direction;
wherein the reflection plate (220) is composed of a plurality of regions and at least one of the plurality of regions has a different reflectance from the remaining regions such that an amount of the light incident on the hologram film (230) is uniform.

2. The lamp of claim 1,
wherein the prism sheet (231) is disposed on a surface facing one surface at which light reflected from the reflection plate (220) is incident on both surfaces of the hologram film (230).

3. The lamp of claim 1,
wherein each of the plurality of concave-convex structures has an inclined surface that forms a predetermined angle with the hologram film (230).

4. The lamp of claim 3,
wherein the angle between the inclined surface and the hologram film (230) is different depending on a position of each of the plurality of concave-convex structures.

5. The lamp of claim 1,
wherein the hologram film (230) comprises:
a substrate made of an optically clear material;
an optically clear adhesive (OCA) layer laminated on the substrate;
a photopolymer layer laminated on the OCA layer; and
a protective layer laminated on the photopolymer layer.

6. The lamp of claim 5,
wherein an interference fringe is formed on the photopolymer layer such that the hologram pattern is formed by the light transmitted through the hologram film (230).

7. The lamp of claim 1,
wherein a reflectance of the reflection plate (220) decreases toward a lower side of the reflection plate.

8. The lamp of claim 1, further comprising:
a light-shielding plate disposed in a direction opposite to a reflection surface of the reflection plate (220) and disposed to be overlapped with the hologram film (230).

9. The lamp of claim 8,
wherein an auxiliary light source for emitting light is disposed at at least a part of the light-shielding plate.

10. The lamp of claim 1, further comprising:
a housing overlapped with at least one of the light source (210) and the reflection plate (220) and disposed to surround the lamp.

## Patentansprüche

1. Lampe umfassend
eine Lichtquelle (210), die Licht aussendet;
einen Hologrammfilm (230), in dem ein Interferenzstreifen des Lichts gebildet wird;
eine Reflexionsplatte (220), die in einem geneigten Zustand in einem vorbestimmten Winkel mit dem Hologrammfilm (230) angeordnet ist, so dass das von der Lichtquelle (210) emittierte Licht reflektiert wird und das reflektierte Licht schräg auf den Hologrammfilm (230) einfällt; und
eine Prismenscheibe (231), die auf einer Oberfläche des Hologrammfilms (230) angeordnet ist und eine Vielzahl von konkav-konvexen Strukturen aufweist, so dass das durch den Hologrammfilm (230) hindurchtretende Licht in einer Richtung gebrochen wird;
wobei die Reflexionsplatte (220) aus einer Vielzahl von Bereichen besteht und mindestens einer der Vielzahl von Bereichen ein anderes Reflexionsvermögen als die übrigen Bereiche aufweist, so dass eine auf den Hologrammfilm (230) einfallende Lichtmenge gleichmäßig ist.

2. Lampe nach Anspruch 1,
wobei die Prismenscheibe (231) auf einer Oberfläche angeordnet ist, die einer Oberfläche zugewandt ist, an der von der Reflexionsplatte (220) reflektiertes Licht auf beide Oberflächen des Hologrammfilms (230) einfällt.

3. Lampe nach Anspruch 1,
wobei jede der mehreren konkav-konvexen Strukturen eine geneigte Oberfläche aufweist, die einen vorbestimmten Winkel mit dem Hologrammfilm (230) bildet.

4. Lampe nach Anspruch 3,
wobei der Winkel zwischen der geneigten Oberfläche und dem Hologrammfilm (230) in Abhängigkeit von der Position jeder der mehreren konkav-konvexen Strukturen unterschiedlich ist.

5. Lampe nach Anspruch 1,
wobei der Hologrammfilm (230) umfasst:
ein Substrat aus einem optisch klaren Material;
eine optisch klare Klebstoffschicht (OCA), die auf das Substrat laminiert ist;
eine Photopolymerschicht, die auf die OCA-Schicht laminiert ist; und
eine Schutzschicht, die auf die Photopolymerschicht laminiert ist.

6. Lampe nach Anspruch 5,
wobei ein Interferenzstreifen auf der Photopolymerschicht gebildet wird, so dass das Hologramm-Muster durch das Licht gebildet wird, das durch den Hologrammfilm (230) übertragen wird.

7. Lampe nach Anspruch 1,
wobei ein Reflexionsgrad der Reflexionsplatte (220) in Richtung einer unteren Seite der Reflexionsplatte abnimmt.

8. Lampe nach Anspruch 1, ferner umfassend
eine lichtabschirmende Platte, die in einer Richtung entgegengesetzt zu einer Reflexionsfläche der Reflexionsplatte (220) angeordnet ist und so angeordnet ist, dass sie mit dem Hologrammfilm (230) überlappt.

9. Lampe nach Anspruch 8,
wobei eine Hilfslichtquelle zum Emittieren von Licht an mindestens einem Teil der lichtabschirmenden Platte angeordnet ist.

10. Lampe nach Anspruch 1, ferner umfassend:
ein Gehäuse, das mit der Lichtquelle (210) und/oder der Reflexionsplatte (220) überlappt und so angeordnet ist, dass es die Lampe umgibt.

## Revendications

1. Lampe comprenant
une source lumineuse (210) émettant de la lumière ;
un film holographique (230) dans lequel une frange d'interférence de la lumière est formée ;
une plaque de réflexion (220) inclinée à un angle prédéterminé par rapport au film holographique (230), de sorte que la lumière émise par la source lumineuse (210) est réfléchie et que la lumière réfléchie arrive obliquement sur le film holographique (230) ; et
une feuille de prisme (231) disposée sur une surface du film holographique (230) et comprenant une pluralité de structures concaves-convexes de sorte que la lumière traversant le film holographique (230) est réfractée dans une direction ;
dans lequel la plaque de réflexion (220) est composée d'une pluralité de régions et au moins l'une de la pluralité de régions a une réflectance différente des autres régions de sorte qu'une quantité de lumière incidente sur le film holographique (230) est uniforme.

2. Lampe de la revendication 1,
dans laquelle la feuille de prisme (231) est disposée sur une surface faisant face à une surface sur laquelle la lumière réfléchie par la plaque de réflexion (220) est incidente sur les deux surfaces du film holographique (230).

3. Lampe de la revendication 1,
dans laquelle chacune des structures concaves-convexes a une surface inclinée qui forme un angle prédéterminé avec le film holographique (230).

4. Lampe de la revendication 3,
dans laquelle l'angle entre la surface inclinée et le film holographique (230) est différent selon la position de chacune des structures concaves-convexes.

5. Lampe de la revendication 1,
dans laquelle le film holographique (230) comprend :
un substrat constitué d'un matériau optiquement clair ;
une couche d'adhésif optiquement clair (OCA) laminée sur le substrat ;
une couche de photopolymère laminée sur la couche OCA ; et
une couche protectrice laminée sur la couche photopolymère.

6. Lampe de la revendication 5,
dans laquelle une frange d'interférence est formée sur la couche photopolymère de sorte que le motif holographique est formé par la lumière transmise à travers le film holographique (230).

7. Lampe de la revendication 1,
dans laquelle la réflectance de la plaque de réflexion (220) diminue vers le côté inférieur de la plaque de réflexion.

8. Lampe de la revendication 1, comprenant en outre
une plaque de protection contre la lumière disposée dans une direction opposée à la surface de réflexion de la plaque de réflexion (220) et disposée de manière à être recouverte par le film holographique (230).

9. Lampe de la revendication 8,
dans laquelle une source de lumière auxiliaire pour émettre de la lumière est disposée sur au moins une partie de la plaque de protection contre la lumière.

10. Lampe de la revendication 1, comprenant en outre
un boîtier superposé à au moins une des sources lumineuses (210) et à la plaque de réflexion (220) et disposé de manière à entourer la lampe.
